# EUROPEAN PATENT APPLICATION

(11) **EP 3 213 850 A1**
(43) Date of publication of application: **06.09.2017**
(21) Application number: 15854432.0
(22) Date of filing: 17.07.2015
(51) Int. Cl.: B23K 1/19, B23K 1/008, B23K 31/02, B23K 101/02, B23K 101/14, B23K 103/10

(54) **BRAZING FURNACE AND BRAZING METHOD FOR ALUMINUM MATERIAL**

(30) Priority: 28.10.2014 JP 2014218831; 10.11.2014 JP 2014228110
(71) Applicant: UACJ Corporation, Tokyo 100-0004 (JP)
(72) Inventor: ITOH, Yasunaga, Tokyo 100-0004 (JP); YANAGAWA, Yutaka, Tokyo 100-0004 (JP); SAKODA, Shoichi, Tokyo 100-0004 (JP)
(74) Representative: Kramer Barske Schmidtchen Patentanwälte PartG mbB
(86) International application number: PCT/JP2015/070550
(87) International publication number: WO 2016/067682

(57) **Abstract**

A brazing furnace 1 comprises a preheating chamber 2 and a brazing chamber 3. The preheating chamber 2 comprises: a vacuum pump 21 for reducing the pressure inside the chamber in the state in which a material to be processed 100 is housed; a preheating apparatus 22, which preheats the material to be processed 100 in a reduced-pressure atmosphere; and a pressure-restoring, gas introducing apparatus 23, which introduces an inert gas for restoring the pressure inside the chamber after the preheating. The brazing chamber 3 comprises: a gas-replacing apparatus 31, which introduces inert gas into the chamber; and a main heating apparatus 32, which heats the material to be processed 100 to a brazing temperature.

## Description

### TECHNICAL FIELD

The present invention relates to a brazing furnace and to an aluminum-material brazing method for brazing an aluminum material.

### BACKGROUND ART

The CAB (controlled-atmosphere brazing) method, which performs brazing by applying a flux to a material to be processed and then heating the material to be processed in an inert-gas atmosphere such as a nitrogen atmosphere, is frequently used as an aluminum-material brazing method. In a fluoride-based flux used in the CAB method, there is a problem in that if the flux oxidizes due to the heating during brazing, then its function as a flux decreases. To avoid this problem, in the CAB method, brazing is usually performed by applying a sufficient amount of the flux and performing control such that the oxygen concentration in the atmosphere is 100 ppm or less and more preferably 20 ppm or less.

Because fluoride-based flux is noncorrosive with respect to aluminum, from the viewpoint of post-brazing corrosion characteristics, there is no need to remove flux residue by cleaning the aluminum material after brazing. Nevertheless, if flux, flux residue, or the like is present due to the application of the flux to the aluminum material, then problems like those below might occur. For example, in an aluminum heat exchanger, which is representative of an automobile heat exchanger, there is a risk that problems will occur, during its manufacture, such as the degradation of surface treatability due to flux residue. In addition, when the aluminum heat exchanger is being used, there is a risk that problems will occur, such as clogging of a refrigerant passageway due to flux or the like, or the flux or the like adversely affecting electronic parts that contact the heat exchanger.

Accordingly, there is ongoing development of brazing methods that reduce the amount of flux applied, brazing methods that do not use flux, and the like. To achieve brazing with a reduced amount of flux or without using flux while reducing the occurrence of joint failures, it is effective to decrease the oxygen concentration, the dew point, and the like in the atmosphere during the brazing.

For example, in Patent Document 1, a method is proposed that performs brazing by using argon, helium, or the like as the inert gas. These gases can decrease the oxygen concentration, the dew point, and the like in the atmosphere more than nitrogen, which is typically used.

In Patent Document 2, a method is proposed in which a front chamber of a brazing-heating zone is made into an independent structure, which is partitioned by a door; the chamber interior is evacuated in the state in which a material to be processed is housed in the front chamber, after which the pressure in the chamber is restored with an inert gas. According to this method, it is possible to reduce the amount of oxygen, moisture, and the like brought from the front chamber into the brazing-heating zone. As a result, the oxygen concentration, the dew point, and the like of the heating zone can be decreased more than in the past; for example, the oxygen concentration can be decreased to approximately 50 ppm relatively easily.

In addition, in Patent Document 3, as a so-called fluxless-brazing method that performs brazing without using flux, a method is proposed that uses a filler material that contains a minute amount of Bi (bismuth), Be (beryllium), or the like. Brazing can be performed without using flux by etching a filler material that contains Bi or the like, or a material clad therewith, by using an acid, an alkali, or the like, and then heating such using a brazing furnace in which the oxygen concentration, the dew point, and the like are strictly controlled.

### PRIOR ART LITERATURE

### Patent Documents

Patent Document 1 Japanese Laid-open Patent Publication 2013-091066
Patent Document 2 Japanese Laid-open Patent Publication H10-277730
Patent Document 3 Japanese Laid-open Patent Publication H11-285817

### SUMMARY OF THE INVENTION

### PROBLEMS TO BE SOLVED BY THE INVENTION

Nevertheless, in the technique of Patent Document 1, it is necessary to use argon, helium, or the like, the cost of which is higher than nitrogen, and consequently it is difficult to apply to a mass-production facility.

In the technique of Patent Document 2, if nitrogen is used as the inert gas, then the oxygen concentration, the dew point, and the like in the brazing-heating zone can be decreased more than in the past. Incidentally, even if the amount of oxygen, moisture, and the like brought into the brazing-heating zone is decreased by the application of the technique of Patent Document 2, the occurrence of joint failures cannot be completely prevented. The degradation of brazeability, the occurrence of joint failures, and the like tend to occur, for example, in seasons in which the dew point in the atmosphere is continuously high, in cases in which the structure of the material to be processed is complex, or the like. The introduction of moisture or the like adsorbed by the jig, the material to be processed, and the like into the brazing-heating zone can be given as a reason for this. As described below, it is difficult to sufficiently remove, by evacuation, the moisture introduced in this manner.

In addition, as fluxless-brazing methods, many techniques, including the technique of Patent Document 3, have been proposed concerning the materials, the heating methods, and the like. Nevertheless, to date, there has been virtually no case in which a fluxless-brazing method in an inert-gas atmosphere has been put into practical use. The point that the joining capability is poorer than in brazing methods that use flux and the point that brazeability tends to be affected by the work environment and therefore it is difficult to stabilize brazing joint quality can be given as factors that hinder the practical use of fluxless-brazing methods. In particular, in the latter problem, there is a risk that a serious joint failure will occur owing to the storage environment, the usage conditions, or the like of the jig, the material to be processed, and the filler material; consequently this is a significant reason why the practical use of fluxless-brazing methods has been hindered.

As described above, in the related art, in brazing with a reduced amount of flux or in brazing without using flux, there is a problem in that it is difficult to stabilize the brazing-joint quality. The inventors conducted additional investigations based on the above background and, as a result, focused on how the three points below can be factors that degrade brazeability.
(1) Oil that adheres to the material to be processed due to shaping work
(2) Moisture and oil that adsorbs to the jig that is used in the brazing
(3) Foreign matter that adheres to the jig that is used in the brazing

In (1) above, it is difficult to remove, by evacuation, the oil that adheres to the material to be processed due to the shaping work. To reduce oil, it is effective to perform a degreasing treatment, using a degreasing-treatment liquid, on the material to be processed after the shaping work. However, there are degreasing-treatment liquids in which usage is restricted due to environmental problems. In addition, to avoid an increase in manufacturing cost owing to the degreasing treatment, it is not unusual to use a volatile oil when performing the shaping work or to omit the degreasing treatment.

In (2) above, for example, it is conceivable that the effect on brazeability will become large if a jig made of graphite is used. In a porous material such as graphite, moisture, oil, and the like adhere to the interiors of the pores thereof; consequently it is difficult to completely remove moisture and the like from the interiors of the pores, even if evacuation is performed for a long time.

In (3) above, it is conceivable that foreign matter that adheres to the jig for various reasons will become a problem. For example, in brazing that uses flux, it frequently occurs that flux, which has melted due to heating, re-solidifies and adheres to the jig. This flux might mix or react with oil adhered to the jig, Mg (magnesium) in the aluminum material, oxygen or moisture in the atmosphere, or the like. Mixtures, reactants, and the like formed in this manner cannot be removed by evacuation.

Thus, moisture and the like, which lead to a degradation of brazeability, can be brought from the material to be processed, the jig, or the like into the brazing-heating zone. Furthermore, it is conceivable that moisture or the like brought into the brazing-heating zone will evaporate or thermally decompose owing to the heating and thereby degrade brazeability. The presumed factors of (1)-(3) above always act in combination and have various effects on brazeability, which makes it difficult to ascertain the cause of degradation in brazeability; furthermore, these presumed factors have hindered the identification of a solution to permanently improve brazeability.

The present invention considers this background and it is an object of the present invention to provide a brazing furnace and a brazing method in which brazing-joint quality can be easily stabilized in brazing with a reduced applied amount of flux or in brazing without using flux.

### MEANS FOR SOLVING THE PROBLEMS

One aspect of the present invention is a brazing furnace used in brazing of a material to be processed composed of an aluminum material, comprising:
a preheating chamber; and
a brazing chamber;
wherein the preheating chamber comprises: a vacuum pump for reducing the pressure inside the chamber in the state in which the material to be processed is housed; a preheating apparatus, which preheats the material to be processed in a reduced-pressure atmosphere; and a pressure-restoring, gas introducing apparatus, which introduces inert gas for restoring the pressure inside the chamber after the preheating; and
the brazing chamber comprises: a gas-replacing apparatus, which introduces inert gas into the chamber; and a main heating apparatus, which heats the material to be processed to a brazing temperature.

Another aspect of the present invention is an aluminum-material brazing method, comprising:
preheating a material to be processed, composed of an aluminum material, in a reduced-pressure atmosphere of 100 Pa or less;
next, making the surroundings of the material to be processed an inert-gas atmosphere by supplying an inert gas; and
subsequently, heating and brazing the material to be processed in the state in which the inert-gas atmosphere is maintained.

### EFFECTS OF THE INVENTION

The brazing furnace has the preheating chamber, which comprises the vacuum pump, the preheating apparatus, and the pressure-restoring, gas introducing apparatus. Therefore, the brazing furnace can reduce the pressure inside the chamber and can perform preheating of the material to be processed in the state in which the material to be processed is housed in the preheating chamber. Furthermore, by performing preheating of the material to be processed in the reduced-pressure atmosphere, evaporation, thermal decomposition, and the like of moisture or the like, which is adhered to the material to be processed and to the jig, can be promoted. As a result, the amount of moisture or the like that is brought into the brazing chamber can be reduced more than the case in which preheating is not performed.

In addition, in the brazing furnace, after the preheating has completed, the pressure can be restored by introducing inert gas into the preheating chamber. By restoring the pressure in the preheating chamber using inert gas, it is possible to avoid exposing the material to be processed and the jig, after they have been subjected to preheating, to the atmosphere; as a result, the re-adhesion of moisture or the like thereto can be avoided.

In addition, by restoring the pressure in the preheating chamber using inert gas, contamination of the brazing chamber by the atmosphere can be avoided when the material to be processed is moved from the preheating chamber into the brazing chamber. As a result, the oxygen concentration and the dew point inside the brazing chamber can be maintained at a level that is lower than that inside conventional brazing furnaces that use inert gas. In addition, because there is no longer a need to, for example, use graphite, which has a sacrificial-oxide capability, in a muffle of the brazing chamber, the effect of reducing the manufacturing cost of the brazing furnace can also be expected.

Thus, in the brazing furnace, the amount of moisture or the like that is brought into the brazing chamber can be more reliably reduced than in conventional brazing furnaces. Therefore, by using the brazing furnace when performing brazing with a reduced amount of flux or brazing without using flux, it is possible to mitigate the effects on brazeability owing to the storage environment, the usage conditions, and the like of the material to be processed, the jig, and the filler material, fluctuations in the environment outside the furnace, and the like. As a result, the brazing furnace can easily stabilize the brazing-joint quality, and can prevent the degradation of brazeability, the occurrence of joint failures, and the like.

Because it is possible to prevent storage conditions and the like of the material to be processed and the like from affecting brazeability, the brazing furnace can be used suitably even in, for example, high-temperature, high-humidity regions, seasons, and the like. In addition, the brazing furnace can achieve satisfactory brazing even in work environments in which strict control of the storage environment and the like of the material to be processed, the jig, and the like is difficult.

In a brazing method according to the above aspects, preheating is performed in a reduced-pressure atmosphere, pressure restoration is performed by supplying inert gas, and brazing is performed in an inert-gas atmosphere. Therefore, as described above, when performing brazing with a reduced applied amount of flux or when performing brazing without using flux, it is possible to prevent the storage environment, the usage conditions, and the like of the material to be processed, the jig, and the filler material, as well as fluctuations in the environment outside the furnace and the like, from affecting brazeability. As a result, brazing-joint quality can be easily stabilized.

### BRIEF DESCRIPTION OF THE DRAWINGS

FIG. 1 is a side view of a brazing furnace according to working example 1.
FIG. 2 is a side view of the brazing furnace, according to working example 2, comprising a plurality of subunits and a cooling chamber.
FIG. 3 is a plan view of a honeycomb core and a frame part, which constitute a honeycomb panel, according to experimental example 1.
FIG. 4 is a side view of a state, according to experimental example 1, in which a material to be processed is fixed to a jig.
FIG. 5 is a plan view of a material to be processed, according to experimental example 2, that simulates a parallel-flow-type heat exchanger.
FIG. 6 is a side cross-sectional view of a material to be processed, according to experimental example 3, that simulates a hollow heat exchanger.
FIG. 7 is a side cross-sectional view of a shielding box, according to experimental example 3, in the state in which the material to be processed is housed therein.

### MODE(S) FOR CARRYING OUT THE INVENTION

In the brazing furnace, a gas that does not have oxidizing properties can be used as the inert gas. Nitrogen gas is typically used in mass-production facilities from the viewpoint of cost.

The preheating chamber is preferably configured such that the pressure inside the chamber can be set to 100 Pa or less. By setting the pressure inside the preheating chamber to 100 Pa or less, the removal of moisture and the like during preheating can be further promoted. As a result, the time required for preheating can be further shortened. If the pressure inside the preheating chamber is greater than 100 Pa, then there is a risk that the time required to remove moisture and the like will lengthen, thereby leading to a decrease in productivity. In addition, depending on the case, there is also a risk that moisture or the like will not be sufficiently removed, thereby leading to a decrease in brazing-joint quality.

The preheating apparatus(es) is (are) preferably configured such that the temperature of the material to be processed can be set to greater than 200°C. By setting the temperature of the material to be processed to 150°C or more during preheating, the evaporation of moisture adhered to the jig or the like can be promoted. In addition, by heating the material to be processed to a temperature that exceeds 200°C, the removal of oil in addition to moisture can be promoted.

The main heating apparatus has a plurality of subunits, the temperature of each subunit being separately adjustable, and the plurality of subunits may be disposed along a transport direction of the material to be processed. In this case, it is possible to finely control the temperature of the material to be processed. Consequently, the temperature of the material to be processed can be changed in steps, for example, in accordance with its position inside the brazing chamber, and thereby a high-quality brazing joint can be achieved.

In the above case, partitioning doors may be provided, which are capable of opening and closing, between adjacent subunits. In this case, by heating the material to be processed in the state in which the partitioning doors are closed, the material to be processed, which is disposed between the adjacent partitioning doors, can be evenly heated by using separate subunits.

The brazing furnace has a cooling chamber that communicates with the brazing chamber, and the cooling chamber may have a cooling-gas introducing apparatus that introduces inert gas into the chamber. By cooling the material to be processed in the inert-gas atmosphere, unnecessary oxidation of the material to be processed can be prevented. In addition, in this case, because the cooling chamber is filled with inert gas, the atmosphere tends not to be mixed into the brazing chamber. Therefore, the oxygen concentration and the dew point inside the brazing chamber can be easily maintained at low levels over a long time.

The brazing furnace can be used either in brazing (flux brazing) of a material to be processed that has been precoated with a fluoride-based flux or in brazing (fluxless brazing) of a material to be processed that has not been precoated with a fluoride-based flux. In either case, the preheating is more preferably performed by heating the material to be processed to a temperature that is greater than 200°C and is 400°C or less. If the material to be processed is heated to a temperature that is greater than 400°C in a reduced-pressure atmosphere, then there is a risk that Zn (zinc), Mg (magnesium), or the like contained in the aluminum material, the flux, or the like will evaporate.

Zn disperses owing to the heating during brazing and thereby forms a concentration gradient in the material. Thereby, it can contribute to the sacrificial-anode effect in the material to be processed and therefore can improve post-brazing corrosion resistance. In addition, Mg breaks up the natural oxide film on the surface of the aluminum material during brazing, and thereby has the effect of improving brazeability. Therefore, if Zn, Mg, or the like evaporates, there is a risk that it will lead to a degradation in post-brazing corrosion resistance, a degradation in the brazeability of the material to be processed, or the like. To avoid such problems, the heating temperature during preheating is preferably set to between greater than 200°C and 400°C or less. It is noted that, if the heating temperature is greater than 400°C, then evaporation of Zn, Mg, or the like can be prevented by performing pressure restoration rapidly.

In case flux brazing is performed using the brazing furnace, because the amount of moisture, oil, and the like that are brought into the brazing chamber can be decreased, the flux can be caused to act more effectively than in conventional methods. Therefore, once satisfactory brazeability has been ensured, the amount of the flux applied can be easily decreased more than in the past.

In flux brazing, a flux diluted with water can also be used. A material to be processed that is coated with such a flux is preferably transported into the preheating chamber after the moisture has been dried beforehand by a separately-prepared drying apparatus. In this case, the drying apparatus and the preheating chamber may be in series. In addition, by installing a water-cooled trap or the like in an exhaust line of the preheating chamber, it is also possible to desiccate the moisture of the flux inside the preheating chamber.

In case fluxless brazing is performed using the brazing furnace, because the amount of moisture, oil, and the like brought into the brazing chamber can be decreased, the joining capability can be improved more than in conventional fluxless brazing. Therefore, brazing that is more satisfactory than in the past can be achieved and brazing-joint quality can be easily stabilized.

If fluxless brazing is performed, preheating and brazing are preferably performed in the state in which the material to be processed is housed in a shielding box made of a metal or graphite and having vents. In this case, moisture and the like are removed from the material to be processed by the preheating, after which inert gas flows into the shielding box from the vents owing to the restoration of pressure inside the brazing chamber. Furthermore, subsequent to the pressure restoration procedure, because the state results in which the pressure differential between the interior and the exterior of the shielding box is substantially nil, it is easy to maintain the inert-gas atmosphere inside the shielding box. Consequently, even in the case in which, for example, the oxygen concentration, the dew point, or the like inside the brazing chamber has risen for some reason, it tends not to be affected by the atmosphere outside the shielding box, and therefore satisfactory brazing can be achieved and brazing-joint quality can be more easily stabilized.

In addition, it is further preferable that a sacrificial-oxide material that consumes the oxygen inside the box is housed in the shielding box. In this case, the oxygen concentration inside the shielding box can be further decreased by the action of the sacrificial-oxide material. Therefore, brazing-joint quality can be more easily stabilized.

For example, a metal, or an alloy thereof, whose free energy during oxide generation is lower than that of the material to be processed can be used as the sacrificial-oxide material. Mg, Mg alloys, and the like can be given as concrete examples thereof. In addition, Al (aluminum), an Al alloy, or the like that is of the same quality as the material to be processed can also be used as the sacrificial-oxide material. The shape of the sacrificial-oxide material is not particularly limited and can be made into various forms such as powdered or plate shaped.

### Working Examples

### (Working Example 1)

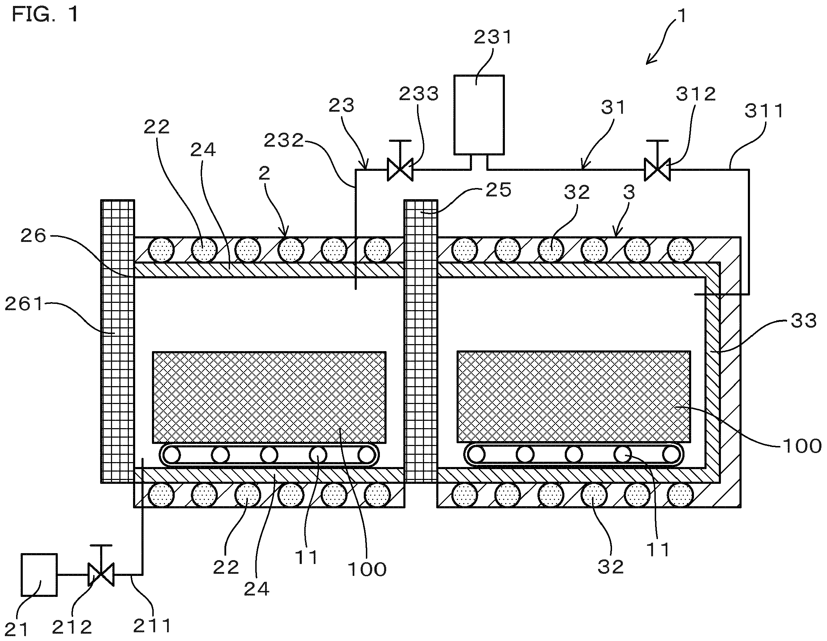

A working example of the brazing furnace and a brazing method will now be explained with reference to the drawings. As shown in FIG. 1, a brazing furnace 1 is used in the brazing of a material to be processed 100, which is composed of an aluminum material. The brazing furnace 1 comprises a preheating chamber 2 and a brazing chamber 3. The preheating chamber 2 comprises: a vacuum pump 21, which is for reducing the pressure inside the chamber in the state in which the material to be processed 100 is housed therein; preheating apparatuses 22, which preheat the material to be processed 100 in a reduced-pressure atmosphere; and a pressure-restoring, gas introducing apparatus 23, which introduces inert gas in order to restore the pressure inside the chamber after the preheating. The brazing chamber 3 comprises: a gas-replacing apparatus 31, which introduces inert gas into the chamber; and main heating apparatuses 32, which heat the material to be processed 100 to the brazing temperature.

The brazing furnace 1 of the present example is an external-heating-type heating furnace wherein the preheating apparatuses 22 and the main heating apparatuses 32 are disposed on the outer sides of stainless-steel muffles 24, 33. An intermediate door 25, which is capable of opening and closing, is provided between the preheating apparatuses 22 and the main heating apparatuses 32; the preheating chamber 2 and the brazing chamber 3 are separated by the intermediate door 25. The dimensions of the soaking region of the preheating chamber 2 and the brazing chamber 3 are: a length of 300 mm, a width of 200 mm, and a height of 200 mm. In addition, an endless-drive, belt-type transport apparatus 11, which transports the material to be processed 100, is provided in both the preheating chamber 2 and the brazing chamber 3. These transport apparatuses 11 are provided such that they are completely housed inside the brazing furnace 1 in the state in which a front door 261, which is described below, is closed, and are separated from a transport apparatus (not shown) provided outside the brazing furnace 1. Consequently, it is possible to prevent moisture, oil, and the like from being brought into the furnace by the transport apparatus provided outside of the brazing furnace 1.

The preheating chamber 2 has an entrance/exit 26, through which the material to be processed 100 is transported into and out of the preheating chamber 2; the entrance/exit 26 is provided with the front door 261, which is capable of opening and closing. The preheating chamber 2 is configured such that, by operating the vacuum pump 21 with the front door 261 and the intermediate door 25 closed, the pressure in the chamber can be set to 0.4 Pa or less. It is noted that the pressure inside the chamber can be measured by a Pirani gauge (not shown).

The vacuum pump 21 is disposed outside of the brazing furnace 1, and an exhaust line 211, which extends from the vacuum pump 21, communicates with the chamber interior of the preheating chamber 2. In addition, an exhaust valve 212, which functions as a cutoff between the vacuum pump 21 and the preheating chamber 2, is provided in the exhaust line 211. It is noted that the vacuum pump 21 of the present example is an oil-sealed rotary pump.

The pressure-restoring, gas introducing apparatus 23 comprises: a gas-supply source 231, which is disposed outside of the brazing furnace 1; a pressure-restoring gas line 232, which extends from the gas-supply source 231 into the preheating chamber 2; and a pressure-restoring valve 233, which is disposed along the pressure-restoration gas line 232. The pressure-restoring, gas introducing apparatus 23 is configured such that nitrogen gas can be supplied into the preheating chamber 2.

The gas-replacing apparatus 31, which introduces inert gas into the brazing chamber 3, comprises: the gas-supply source 231, which is disposed outside of the brazing furnace 1; a replacement-gas line 311, which extends from the gas-supply source 231 and enters into the brazing chamber 3; and a replacement valve 312, which is disposed along the replacement-gas line 311. The gas-replacing apparatus 31 is configured such that, by continuously introducing nitrogen gas into the brazing chamber 3 at 5 m³/h, the chamber interior can be replaced with nitrogen gas. After the interior of the brazing chamber 3 is filled with nitrogen gas, surplus nitrogen gas is discharged via a gas-escape port (not shown) provided in the vicinity of the intermediate door 25. It is noted that, in the present example, the gas-supply source 231 is shared among the pressure-restoring, gas introducing apparatus 23 and the gas-replacing apparatus 31.

The brazing furnace 1 can be used, for example, as described below. First, the front door 261 is opened and the material to be processed 100, which is composed of an aluminum material, is transported into the preheating chamber 2. Subsequently, the front door 261 and the intermediate door 25 are closed. In this state, the vacuum pump 21 is operated to create a reduced-pressure atmosphere inside the chamber, and the preheating apparatuses 22 are operated to preheat the material to be processed 100. The timing at which the exhaust is started and the timing at which the preheating of the material to be processed 100 is started may be simultaneous, or one may proceed the other. From the viewpoint of avoiding unnecessary oxidation of the material to be processed 100, it is preferable to start the exhaust prior to the start of preheating.

At the point in time when the pressure inside the preheating chamber 2 reaches 100 Pa or less and the temperature of the material to be processed 100 reaches a temperature that exceeds 200°C, preheating is complete and the exhaust valve 212 is closed; subsequently, the vacuum pump 21 and the preheating apparatuses 22 are stopped. Thereafter, the pressure-restoration valve 233 is opened and the pressure inside the preheating chamber 2 is restored using nitrogen gas until it reaches atmospheric pressure. Thereby, the surroundings of the material to be processed 100 become an inert-gas atmosphere.

After the pressure restoration is complete, the pressure-restoration valve 233 is closed and, subsequently, the intermediate door 25 is opened. Thereafter, the material to be processed 100 is transported into the brazing chamber 3 and the intermediate door 25 is closed. Because the interior of the brazing chamber 3 is continuously an inert-gas atmosphere, an inert-gas atmosphere of the surroundings of the material to be processed 100 is maintained during the transport of the material to be processed 100.

Thereafter, the material to be processed 100 disposed inside the brazing chamber 3 is heated by the main heating apparatuses 32, and thereby brazing is performed. After the brazing is complete, the intermediate door 25 is opened and the material to be processed 100 is transported into the preheating chamber 2. The inert-gas atmosphere is maintained inside the chamber of the preheating chamber 2, and the material to be processed 100, for which brazing has ended, is cooled inside the chamber of the preheating chamber 2, after which the material to be processed 100 is transported out via the entrance/exit 26. Brazing of the material to be processed 100 can be performed by the above.

The brazing furnace 1 of the present example is configured such that preheating can be performed in a reduced-pressure atmosphere, pressure restoration can be performed by supplying inert gas, and brazing can be performed in an inert-gas atmosphere. Therefore, as described above, when performing brazing with a reduced applied amount of flux or when performing brazing without using flux, it is possible to prevent the storage environment, the usage conditions, and the like of the material to be processed 100, the jig, and the filler material, as well as fluctuations in the environment outside the furnace and the like, from affecting brazeability. As a result, brazing-joint quality can be easily stabilized.

In addition, in the brazing furnace 1, because it is possible to prevent storage conditions or the like of the material to be processed 100 and the like from affecting brazeability, the brazing furnace 1 can be used suitably even in, for example, high-temperature, high-humidity regions, seasons, and the like. In addition, the brazing furnace 1 can achieve satisfactory brazing even in work environments in which strict control of the storage environment or the like of the material to be processed 100, the jig, and the like is difficult.

### (Working Example 2)

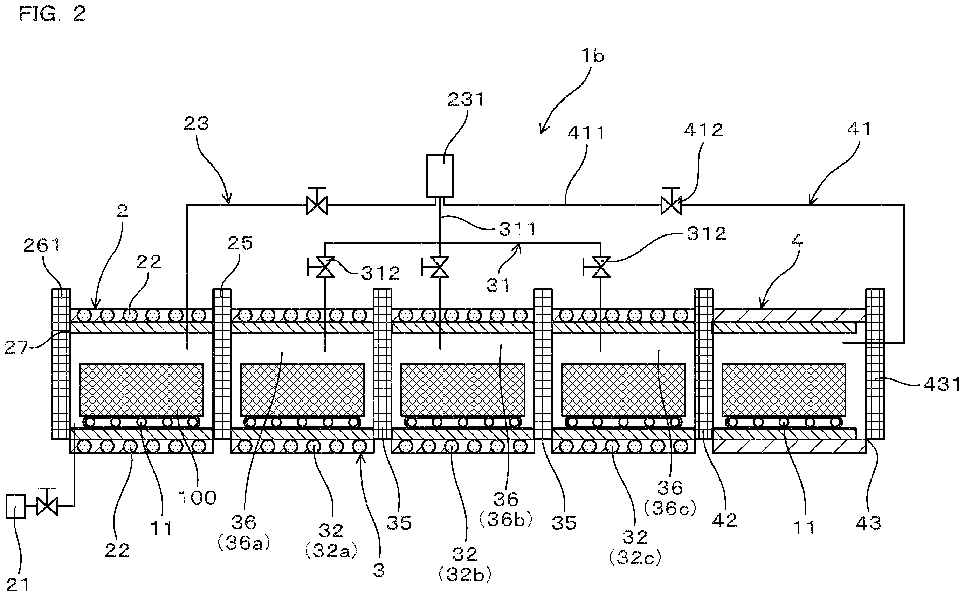

The present example is an example of a brazing furnace 1b that comprises three subunits 32a, 32b, 32c and a cooling chamber 4. As shown in FIG. 2, the main heating apparatuses 32 in the brazing furnace 1b of the present example comprise the three subunits 32a-32c, the temperatures of which are individually adjustable. The subunits 32a-32c are disposed along the transport direction of the material to be processed 100. In addition, partitioning doors 35, which are capable of opening and closing, are provided between adjacent subunits 32a-32c. In the present example, the soaking-region dimensions of each of three heating zones 36 (36a, 36b, 36c), which are separated by the partitioning doors 35, are: a length of 300 mm, a width of 200 mm, and a height of 200 mm. In addition, the replacement-gas line 311 of the gas-replacing apparatus 31 enters into each of the individual heating zones 36a-36c.

In addition, the brazing furnace 1b of the present example comprises the cooling chamber 4, which communicates with the brazing chamber 3. The material to be processed 100 is transported into the brazing furnace 1b via an entrance 27 provided in the preheating chamber 2, sequentially passes through the preheating chamber 2, the heating zones 36a-36c, and the cooling chamber 4, and is transported out of the brazing furnace 1b via an exit 43 provided in the cooling chamber 4. Furthermore, it is configured such that, by passing through each chamber in the above-mentioned order, the preheating, the pressure restoration, the brazing, and the cooling of the material to be processed 100 can be performed sequentially.

The cooling chamber 4 comprises a cooling-gas introducing apparatus 41, which introduces inert gas into the chamber. The brazing chamber 3 and the cooling chamber 4 are separated by a rear door 42, which is capable of opening and closing. In addition, to prevent contamination by the atmosphere from the outside of the brazing furnace 1, the exit 43 provided in the cooling chamber 4 is provided with an exit door 431 that is capable of opening and closing. It is noted that a metal curtain or the like may be installed instead of the exit door 431. In addition, in the configuration having the exit door 431, the cooling chamber 4 may be further configured such that the chamber interior can be exhausted and the pressure inside the chamber can be restored. In this case, by exhausting the chamber interior of the cooling chamber 4 and subsequently restoring the pressure using inert gas, contamination of the interior of the cooling chamber 4 by the atmosphere can be reliably prevented. As a configuration capable of achieving such functions, a configuration is conceivable in which, for example, the exhaust line of a vacuum pump enters into the chamber, the same as in the preheating chamber 2.

The cooling-gas introducing apparatus 41 comprises: the gas-supply source 231, which is disposed outside of the brazing furnace 1b; a cooling-gas line 411, which extends from the gas-supply source 231 and enters into the chamber from the side of the exit 43; and a cooling valve 412, which is disposed along the cooling-gas line 411. The cooling-gas introducing apparatus 41 is configured such that, by introducing nitrogen gas from the side of the exit 43 of the cooling chamber 4, the interior of the cooling chamber 4 can be replaced with nitrogen gas. After the interior of the cooling chamber 4 is filled with nitrogen gas, surplus nitrogen gas is discharged via a gas-escape port (not shown) provided in the vicinity of the rear door 42. It is noted that, in the present example, the gas-supply source 231 is shared among the pressure-restoring, gas introducing apparatus 23, the gas-replacing apparatus 31, and the cooling-gas introducing apparatus 41. Other aspects are the same as in working example 1. Of the symbols used in FIG. 2, symbols that are identical to symbols used in working example 1 indicate structural elements and the like that are the same as in working example 1, except as otherwise explained.

The main heating apparatuses 32 of the brazing furnace 1b of the present example comprise a plurality of subunits 32a-32c, the temperatures of which are individually adjustable, and the plurality of subunits 32a-32c is disposed along the transport direction of the material to be processed 100. In addition, the partitioning doors 35, which are capable of opening and closing, are provided between adjacent subunits 32a-32c. Therefore, the heating temperature of the material to be processed 100 in each of the individual heating zones 36a-36c, which are separated by the partitioning doors 35, can be changed in steps. In addition, by performing heating with the partitioning doors 35 closed, the material to be processed 100 can be evenly heated in the individual heating zones 36a-36c. As a result, brazing quality can be further improved.

### (Experimental Example 1)

The present example is an example in which brazing tests were performed using the brazing furnace 1 of working example 1. In the present example, the manufacturing conditions were variously modified as shown in Table 1, and 12 types of honeycomb panels (test bodies E1-E6 and test bodies C1-C6) were manufactured. The configuration of a material to be processed 101 and an experimental method are explained below.

### <Material to Be Processed 101>

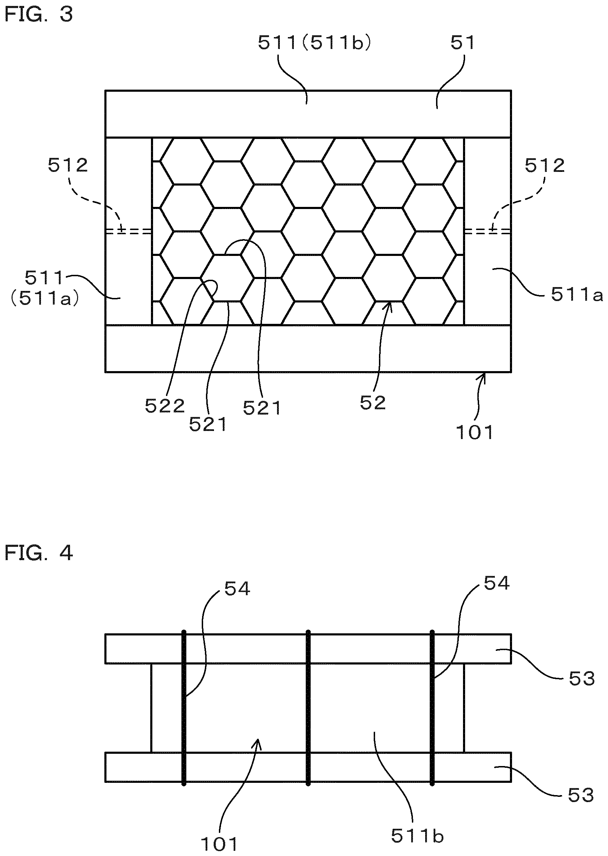

As shown in FIG. 3, the material to be processed 101 of the present example comprises: an oblong frame part 51 constituted from four hollow extrusions 511; a honeycomb core 52 disposed in an interior of the frame part 51; and faceplates (not shown) that sandwich the frame part 51 and the honeycomb core 52 from both the upper and lower surfaces. After these have been assembled into a prescribed shape (refer to FIG. 4), the honeycomb panel can be manufactured by performing brazing.

In the frame part 51, the outer dimension in the long side direction (the length direction) is 260 mm, and the outer dimension of the short sides (the width direction) is 180 mm. The hollow extrusions 511 that constitute the frame part 51 are constituted from a JIS A 6063 aluminum alloy, and the outer dimensions of a cross section orthogonal to the longitudinal direction are 30 mm x 30 mm. In addition, it is configured such that two hollow extrusions 511 a, of the four hollow extrusions 511, that constitute the short sides of the frame part 51 each have a vent 512, whose diameter is 3 mm, at a center part thereof; the interior of the frame part 51 can be exhausted and its pressure restored via the vents 512.

The honeycomb core 52 is configured by arranging a plurality of core members 521; as shown in FIG. 3, hexagonal-column-shaped cells 522 are formed by the core members 521 that are adjacent. The core members 521 are manufactured by corrugating a bare plate composed of a JIS A 6951 aluminum alloy. The height of the honeycomb core 52 is 30 mm, and the size of each cell 522 is 30 mm. In addition, each individual cell 522 is configured such that it has two through holes (not shown) having a diameter of 1 mm and such that each cell 522 can be exhausted and the pressure therein restored via the through holes.

It is noted that, as shown in Table 1, core members 521, which are not degreased, are provided in the honeycomb core 52 of each of test bodies E1-E6 and C1-C5. Core members 521, which were degreased in advance using acetone, were provided in the honeycomb core 52 of test body C6.

The faceplate is composed of a core and a filler material, which is clad onto one side of the core at a cladding percentage of 10%, and has a thickness of 1 mm. The core of the faceplate is constituted from a JIS A 6951 aluminum alloy, and the filler material is constituted from an aluminum alloy having a chemical composition of Al-10%Si-0.02%Bi.

### <Experimental Method>

After the material to be processed 101 was assembled into the prescribed shape, it was fixed using a jig. The jig of the present example is an isotropic-graphite plate having a thickness of 10 mm. To simulate the state in which the jig was stored in a high-humidity environment, the entire surface of each isotropic-graphite plate 53 was sprayed with 30 cc of water using a sprayer, and the isotropic-graphite plates 53 were shelved at room temperature for 18 h. As shown in FIG. 4, the material to be processed 101 was interposed between the pair of isotropic-graphite plates 53, which was subjected to the above-mentioned treatment in advance, and the material to be processed 101 was fixed by tightening these using stainless-steel wires 54.

Subsequently, preheating and brazing were performed using the brazing furnace 1 of working example 1. The material to be processed 101 was transported into the preheating chamber 2, and the front door 261 was closed, after which the chamber interior was exhausted immediately and preheating was started. The control of the pressure inside the chamber and the heating temperature of the material to be processed 101 was performed as below. The pressure inside the chamber was controlled such that the pressure inside the preheating chamber 2 reached the values shown in Table 1, after which the exhaust valve 212 was manually operated to adjust the open/close state, and the pressure became substantially constant by the time that the preheating was completed.

Because it is difficult to accurately measure the temperature of the material to be processed 101 in a reduced-pressure atmosphere, the heating temperature of the material to be processed 101 was controlled by controlling the temperature of the furnace walls of the preheating chamber 2 and controlling the amount of time that the material to be processed 101 resided inside the chamber. Specifically, the temperature of the furnace walls of the preheating chamber 2 was brought to the values indicated in Table 1 by controlling the preheating apparatuses 22 and, in this state, the material to be processed 101 was made to reside inside the chamber for 20 min. It is noted that, by performing the preliminary heating in this manner, it was confirmed in advance that the temperature of the material to be processed 101 rises up to a range of -5 to 0°C using the temperature of the furnace walls of the preheating chamber 2 as the reference.

After the preheating was completed, the pressure inside the preheating chamber 2 was restored using nitrogen gas; subsequently, the intermediate door 25 was opened and the material to be processed 101 was transported into the brazing chamber 3. The oxygen concentration and the dew point of the atmosphere inside the brazing chamber 3 were as shown in Table 1. After the intermediate door 25 was closed, a thermocouple was inserted into the brazing chamber 3 via a ceiling part so as to make contact with the material to be processed 101, and the material to be processed 101 was heated by the main heating apparatuses 32 while measuring the temperature of the material to be processed 101. Heating ended at the point in time at which the temperature of the material to be processed 101 reached 600°C. It is noted that, in the present example, the thermocouple for measuring the temperature was inserted via the ceiling part of the brazing chamber 3, but it is also possible to insert the thermocouple via a side surface of the brazing chamber 3.

Subsequently, the material to be processed 101 was transported into the preheating chamber 2 and cooled in a nitrogen atmosphere, after which it was removed to the outside of the furnace via the entrance/exit 26. Brazing was terminated by the above, and thereby the honeycomb panel was obtained. For each test body after brazing, the joined state between the honeycomb core 52 and the faceplate and the joined state between the frame part 51 and the faceplate were evaluated by ultrasonic inspection. Subsequently, the center of each test body was cut and the joined states between the core members 521 that constitute the honeycomb cores 52 were visually evaluated. The results are shown in Table 1.

**Table 1**

| Test Body | Manufacturing Conditions | | | | | Evaluation Results | | |
|---|---|---|---|---|---|---|---|---|
| | Degreasing Treatment of Core Member 521 | Preheating Chamber 2 | | Brazing Chamber 3 | | Joined state Between Honeycomb 52 and Faceplate | Joined State Between Frame Part 51 and Faceplate | Joined State Between Core Members 521 |
| | | Ultimate Pressure (Pa) | Set Temp. (°C) | Oxygen Concentration (ppm) | Dew Point (°C) | | | |
| E1 | None | <0.4 | 320 | 0.6 | -72 | A+ | A+ | A+ |
| E2 | None | 20 | 320 | 4.8 | -68 | A+ | A | A+ |
| E3 | None | 100 | 320 | 14.9 | -62 | A+ | A | A+ |
| E4 | None | <0.4 | 210 | 2.8 | -69 | A+ | A+ | A |
| E5 | None | 20 | 210 | 9.9 | -65 | A+ | A | A |
| E6 | None | 100 | 210 | 18.5 | -60 | A+ | A | A |
| C1 | None | 180 | 320 | 44.1 | -52 | A | B | B |
| C2 | None | <0.4 | 140 | 66.9 | -45 | A | C | C |
| C3 | None | 180 | 140 | 142.5 | -39 | B | C | C |
| C4 | None | <0.4 | Not heated | 255.6 | -36 | C | C | C |
| C5 | None | Atmospheric pressure | Not heated | Measurement not possible | Measurement not possible | D | D | C |
| C6 | Present | <0.4 | 140 | 67.3 | -46 | A | C | A |

It is noted that the meanings of the symbols mentioned in the columns of the evaluation results in Table 1 are as below.
- Joined state between the honeycomb core 52 and the faceplate
   A+: Extremely satisfactory
   A: Satisfactory, but some fillet shapes had uneven portions
   B: There were portions in which fillets were not formed
   C: Portions in which fillets were not formed were relatively many
   D: There were many portions in which fillets were not formed
- Joined state between the frame part 51 and the faceplate
   A+: Extremely satisfactory
   A: Satisfactory, but there were minute unjoined portions
   B: There were unjoined portions
   C: There were many unjoined portions
   D: Virtually the entire surface was unjoined
- Joined state between the core members 521
   A+: Extremely satisfactory
   A: Satisfactory, but some fillet shapes had uneven portions
   B: There were portions in which fillets were not formed
   C: Virtually no fillets were formed

As can be understood from Table 1, the joined state was satisfactory in every test body E 1-E6, in which preheating was performed in a reduced-pressure atmosphere and brazing was performed by supplying an inert gas and in an inert-gas atmosphere. Among test bodies E1-E6, the joined state between the frame part 51 and the faceplate was particularly satisfactory in test bodies E1 and E4, in which the pressure in the preheating chamber 2 was lowered. In test bodies E2, E3, E5 and E6, the pressure in the preheating chamber 2 was higher than in test bodies E1 and E4; consequently, in the junction between the frame part 51 and the faceplate, minute unjoined portions were formed in the vicinity of the outer perimeter. These minute unjoined portions were of an extent that did not become a problem from the standpoint of practical use, and therefore the joined state was satisfactory.

In addition, in test bodies E1-E3, in which the set temperature of the preheating chamber 2 was set high, the joined state between the core members 521 was particularly satisfactory. Because the set temperature of the preheating chamber 2 in test bodies E4-E6 was lower than in test bodies E1-E3, uneven portions were observed in some fillet shapes. Nevertheless, the fillet shapes of test bodies E4-E6 were of an extent that did not become a problem from the standpoint of practical use, and therefore the joined states were satisfactory.

In test body C1, in which the pressure in the preheating chamber 2 was set to 180 Pa, the joined state between the frame part 51 and the faceplate was poor, and unjoined portions were formed. In addition, in the junctions between the core members 521 as well, many fillet tearings occurred, resulting in joint failures. It is conceivable that these joint failures were caused by an increase in the oxygen concentration and the dew point inside the chamber principally owing to the effect of moisture release from the jig in the brazing chamber 3.

In test body C2, in which the temperature in the preheating chamber 2 was set to 140°C, the joined state between the frame part 51 and the faceplate was poor, and unjoined portions were formed. In addition, in the junctions between the core members 521, virtually no fillets were formed. It is assumed that, when the temperature in the preheating chamber 2 is 140°C, the temperature of the material to be processed 101 has reached approximately 135-140°C; consequently, these joint failures are conceivably caused by oil not being completely removed from the core members 521 owing to insufficient preheating and, as a result, the wettability of the filler material being decreased.

In test body C3, in which both the pressure and the temperature in the preheating chamber 2 were set to poor conditions, the joined states were poorer than in test body C2. In addition, in test body C4, in which preheating was not performed, and in test body C5, in which both preheating and pressure reduction were not performed, virtually no fillets were formed.

In test body C6, in which the degreasing treatment was performed on the honeycomb core 52, the joined state between the honeycomb core 52 and the faceplate and the joined states between the core members 521 were comparatively satisfactory, but the joined state between the frame part 51 and the faceplate was poor, which resulted in joint failures. Because of this, it can be understood that the joined states between the core members 521 improved owing to the removal of oil from the core members 521 in the brazing of test body C6. On the other hand, it is conjectured that the joined state between the frame part 51 and the faceplate was not improved because moisture was not completely removed from the jig by setting the temperature in the preheating chamber 2 to 140°C.

### (Experimental Example 2)

The present example is an example in which brazing tests were performed on mini-cores that simulate a parallel-flow-type heat exchanger. In the present example, the manufacturing conditions were variously modified as shown in Table 2, and 12 types of mini-cores (test bodies E11-E16 and test body C11-C16) were manufactured. The configuration of a material to be processed 102 and an experimental method are explained below.

### <Material to Be Processed 102>

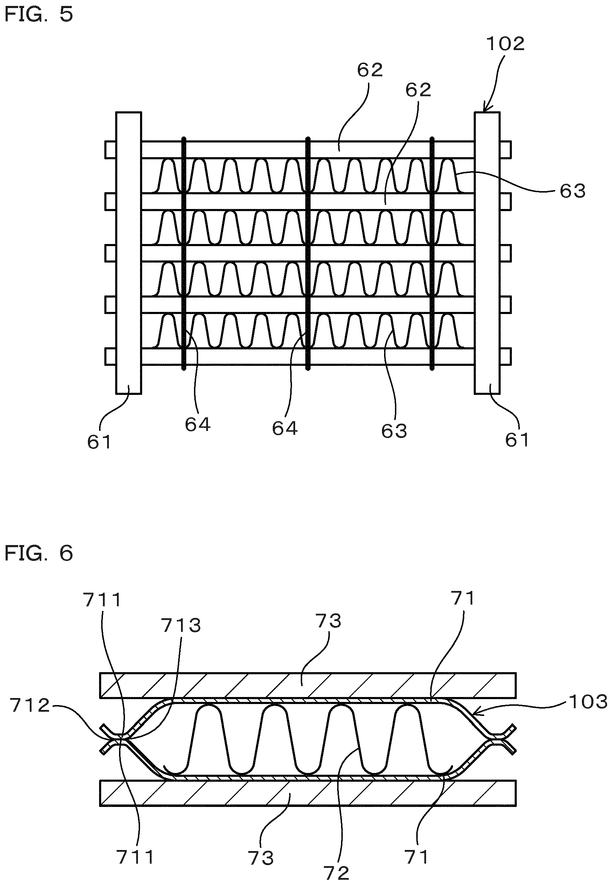

As shown in FIG. 5, the material to be processed 102 of the present example comprises: a pair of headers 61; five extruded tubes 62, which communicate with the headers 61 in the state in which the extruded tubes 62 are arranged parallel to one another; and corrugated outer fins 63, which are disposed between adjacent extruded tubes 62. After these were assembled into a prescribed shape, the mini-cores could be manufactured by performing brazing. In the resulting mini-cores, the dimension of the extruded tubes 62 in the longitudinal direction (the length direction) was 260 mm, and the dimension in the lined-up direction (the width direction) was 180 mm.

The extruded tubes 62 are perforated tubes, which are constituted from a JIS A 1000-series aluminum, and the interiors of the tubes are partitioned into multiple passageways by partitions. It is noted that, in test bodies E11-E16 and C11-C15, extruded tubes 62, which were not degreased, were provided. In test body C16, extruded tubes 62, which were degreased in advance using acetone, were provided.

Each header 61 is composed of a core and a filler material, which is clad onto both surfaces of the core at a cladding percentage of 5% each, and has a thickness of 1.2 mm. The core of each header 61 is constituted from a JIS A 3003 aluminum alloy, and the filler material is constituted from a JIS A 4343 aluminum alloy. In addition, each header 61 has through holes (not shown) for passing the extruded tubes 62 therethrough.

Each outer fin 63 is composed of a core and a filler material, which is clad onto both surfaces of the core at a cladding percentage of 10% each, and has a thickness of 0.1 mm. The core of each outer fin 63 is constituted from a JIS A 3003 aluminum alloy, and the filler material is constituted from a JIS A 4045 aluminum alloy.

The headers 61 and the outer fins 63 were subjected to a degreasing treatment using acetone, after which they were provided for the assembly of the material to be processed 102 in the state in which flux had been applied in advance in the amounts shown in Table 2. The amount of flux applied was calculated by subtracting the mass of the headers 61 and the outer fins 63, which were measured in advance prior to the application of the flux, from the mass of the headers 61 and the outer fins 63 after the application and drying of the flux were performed.

### <Experimental Method>

After the material to be processed 102 was assembled into a prescribed shape, as shown in FIG. 5, the material to be processed 102 was fixed by tightly fastening the extruded tubes 62 and the outer fins 63 in the width direction using stainless-steel wires 64.

Subsequently, preheating and brazing were performed using the brazing furnace 1 of working example 1. The brazing procedure was the same as in experimental example 1, except that the pressure and the like inside the preheating chamber 2 were modified to the conditions shown in Table 2. For each test body after brazing, the joined states between the headers 61 and the extruded tubes 62 and the joined states between the extruded tubes 62 and the outer fins 63 were visually evaluated. The results are shown in Table 2.

**Table 2**

| Test Body | Manufacturing Conditions | | | | | | | Evaluation Results | |
|---|---|---|---|---|---|---|---|---|---|
| | Degreasing Treatment of Extruded Tubes 62 | Amount of Flux Applied | | Preheating Chamber 2 | | Brazing Chamber 3 | | Joined state Between Headers 61 and Extruded Tubes 62 | Joined state Between Extruded Tubes 62 and Outer Fins 63 |
| | | Header 61 (g/m2) | Outer Fin 63 (g/m2) | Ultimate Pressure (Pa) | Set Temp. (°C) | Oxygen Concentration (ppm) | Dew Point (°C) | | |
| E11 | None | 1.9 | 1.0 | <0.4 | 320 | 0.4 | -74 | A+ | A+ |
| E12 | None | 2.0 | 0.9 | 20 | 320 | 2.5 | -70 | A+ | A+ |
| E13 | None | 1.8 | 0.9 | 100 | 320 | 8.9 | -67 | A | A |
| E14 | None | 1.9 | 1.9 | <0.4 | 210 | 1.9 | -71 | A+ | A+ |
| E15 | None | 2.0 | 1.8 | 20 | 210 | 7.8 | -67 | A | A |
| E16 | None | 2.1 | 1.9 | 100 | 210 | 9.2 | -65 | A | A |
| C11 | None | 3.2 | 3.1 | 180 | 320 | 13.0 | -55 | B | A |
| C12 | None | 2.1 | 2.0 | <0.4 | 140 | 19.5 | -48 | B | B |
| C13 | None | 3.2 | 3.2 | 180 | 140 | 32.4 | -45 | B | B |
| C14 | None | 2.2 | 2.3 | <0.4 | Not heated | 33.3 | -45 | C | C |
| C15 | None | 5.2 | 3.1 | Atmospheric pressure | Not heated | 62.2 | -41 | C | C |
| C16 | Present | 3.0 | 3.1 | <0.4 | 140 | 18.8 | -56 | B | A |

It is noted that the meanings of the symbols mentioned in the columns of the evaluation results in Table 2 are as below.
A+: Extremely satisfactory
A: Satisfactory, but some fillet shapes had uneven portions
B: There were portions in which fillets were not formed
C: There were many portions in which fillets were not formed

As can be understood from Table 2, the joined states were satisfactory in every test body E11-E16, in which preheating was performed in a reduced-pressure atmosphere and brazing was performed by supplying an inert gas and in an inert-gas atmosphere. When this type of heat exchanger is manufactured by flux brazing, it is standard to apply approximately 3 g/m² of flux in order to achieve satisfactory brazing joints. In contrast, in test bodies E 11-E13, joined states that were not a problem from the standpoint of practical use could be achieved even when the target amount of flux applied to the headers 61 was reduced to 2 g/m² and the target amount of flux applied to the outer fins 63 was reduced to 1 g/m².

In addition, in test bodies E14-E16, the temperature in the preheating chamber 2 was set lower than in test bodies E11-E13, but the target amount of flux applied to the outer fins 63 was 2 g/m² and, as a result, joined states that were not a problem from the standpoint of practical use could be achieved.

In test body C11, in which the pressure in the preheating chamber 2 was set to 180 Pa, a standard amount of flux (target of 3 g/m²) was applied to both the headers 61 and the outer fins 63, but fillet tearings occurred at the junctions between the headers 61 and the extruded tubes 62, which resulted in joint failures. These joint failures were conceivably caused by the rise in the oxygen concentration and the dew point inside the chamber.

In test body C12, in which flux was applied to the same extent as in test bodies E14-E16 and in which the temperature in the preheating chamber 2 was set to 140°C, fillet tearings occurred in both the junctions between the headers 61 and the extruded tubes 62 and the junctions between the extruded tubes 62 and the outer fins 63, which resulted in joint failures. It was assumed that the temperature of the material to be processed 102 reached approximately 135-140°C when the temperature in the preheating chamber 2 was 140°C. Consequently, it is conceivable that the joint failures were caused by, in addition to the rise in the oxygen concentration and the dew point inside the chamber, oil not being completely removed from the extruded tubes 62.

In test body C13, in which both the pressure and the temperature in the preheating chamber 2 were set to poor conditions, a standard amount of flux (target of 3 g/m²) was applied, but the joined states did not improve, which resulted in joint failures. In addition, in test body C 14, in which preheating was not performed, and in test body C 15, in which both preheating and pressure reduction were not performed, the joined states were poorer than in test bodies C12 and C13. In particular, in test body C15, despite the fact that the target amount of flux applied was 5 g/m², which is greater than the standard amount, many fillet tearings occurred in both the junctions between the headers 61 and the extruded tubes 62 and the junctions between the extruded tubes 62 and the outer fins 63.

In test body C16, in which degreasing treatment was performed on the extruded tubes 62, the joined states between the extruded tubes 62 and the outer fins 63 were comparatively satisfactory, but the joined states between the headers 61 and the extruded tubes 62 were poor. Based on this, it was understood that the joined states between the extruded tubes 62 and the outer fins 63 improved owing the removal of oil from the extruded tubes 62 in the brazing of test body C16. On the other hand, it was conjectured that the joined states between the headers 61 and the extruded tubes 62 became poor, because the oxygen concentration and the dew point inside the brazing chamber 3 were high.

### (Experimental Example 3)

The present example is an example in which brazing tests were performed on mini-cores that simulate a hollow heat exchanger. In the present example, the manufacturing conditions were variously modified as shown in Table 3, and 20 types of mini-cores (test bodies E21-E32 and test bodies C21-C28) were manufactured. The configuration of a material to be processed 103 and an experimental method are explained below.

### <Material to Be Processed 103>

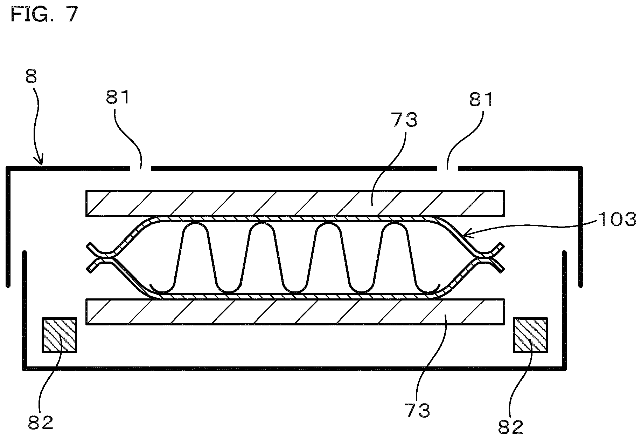

As shown in FIG. 6 and FIG. 7, the material to be processed 103 of the present example comprises: a pair of cup parts 71, each of which is formed in a square-cup shape; and a corrugated inner fin 72. Flange parts 711 are provided on outer-perimeter edges of the cup parts 71, and the pair of cup parts 71 is disposed such that the flange parts 711 make contact with one another. In addition, the inner fin 72 is disposed in an internal space formed between the two cup parts 71.

After the pair of cup parts 71 and the inner fin 72 were assembled into a prescribed shape (refer to FIG. 6), the mini-cores could be manufactured by performing brazing. The resulting mini-cores each had a length of 50 mm, a width of 50 mm, and a thickness of 10 mm.

Each cup part 71 is composed of a core and a filler material, which is clad onto both surfaces of the core at a cladding percentage of 10% each, and has a thickness of 0.6 mm. The core of each cup part 71 is constituted from a JIS A 6951 aluminum alloy, and the filler material is constituted from an aluminum alloy having a chemical composition of Al-10%Si-0.03%Bi.

The inner fin 72 is constituted from a JIS A 3003 aluminum alloy and has a thickness of 0.1 mm. The cup parts 71 and the inner fins 72 were subjected to a degreasing treatment in advance using acetone, after which they were provided for assembly.

### <Experimental Method>

After the material to be processed 103 was assembled into a prescribed shape, it was fixed using a jig. The jig of the present example is stainless-steel plates 73 having a thickness of 3 mm. As shown in FIG. 6, the material to be processed 103 is interposed between the pair of stainless-steel plates 73, and the material to be processed 103 is fixed by tightly fastening these with stainless-steel wires (not shown).

For each of test bodies E27-E32, C25, C26 and C28, the material to be processed 103 fixed by the stainless-steel plates 73 was housed in a shielding box 8 (refer to FIG. 7). The shielding box 8 was constituted from stainless steel (SUS304), an aluminum alloy (A5052), or isotropic graphite, as shown in Table 3, and four vents 81, each having a diameter of 3 mm, were provided.

In each of test bodies E30-E32, sacrificial-oxide materials 82 were further housed in the interior of the shielding box 8. As shown in Table 3, in the brazing of test body E30, cutting-scrap-like sacrificial-oxide materials 82 composed of 0.5 g of pure Mg were installed in the interior of the shielding box 8. In the brazing of test body E31, cutting-scrap-like sacrificial-oxide materials 82 composed of 0.5 g of an Al-35%Mg alloy were installed in the interior of the shielding box 8. In the brazing of test body E32, two sacrificial-oxide materials 82 composed of a JIS A 5052 aluminum-alloy plate were installed in the interior of the shielding box 8. The dimensions of the aluminum-alloy plate were: a length of 40 mm, a width of 10 mm, and a thickness of 1 mm; the mass per plate was 1 g.

Subsequently, preheating and brazing were performed using the brazing furnace 1 of working example 1. The brazing procedure was the same as in experimental example 1, except that the pressure and the like inside the preheating chamber 2 were modified to the conditions shown in Table 3. Each test body after brazing was cut at the center, and the fillet formation state on the outer side of each flange part 711 (refer to symbol 712 in FIG. 6), the fillet formation state on the inner side (refer to symbol 713 in FIG. 6), and the fillet formation state between the cup parts 71 and the inner fin 72 were visually evaluated. The results are show in Table 3.

**Table 3**

| Test Body | Manufacturing Conditions | | | | | | Evaluation Results | | |
|---|---|---|---|---|---|---|---|---|---|
| | Shielding Box 8 | Sacrificial-Oxide Materials 82 | Preheating Chamber 2 | | Brazing Chamber 3 | | Outer Sides of Flange Parts 711 (Symbols 712) | Inner Sides of Flange Parts 711 (Symbols 713) | Between Cup Parts 71 and Inner Fins 72 |
| | | | Ultimate Pressure (Pa) | Set Temp. (°C) | Oxygen Concentration (ppm) | Dew Point (°C) | | | |
| E21 | None | None | <0.4 | 320 | 0.5 | -73 | A | A+ | A+ |
| E22 | None | None | 20 | 320 | 3.1 | -69 | A | A+ | A+ |
| E23 | None | None | 100 | 320 | 9.3 | -67 | A | A+ | A+ |
| E24 | None | None | <0.4 | 210 | 1.8 | -70 | A | A+ | A+ |
| E25 | None | None | 20 | 210 | 7.9 | -66 | A | A+ | A+ |
| E26 | None | None | 100 | 210 | 9.8 | -65 | A | A+ | A+ |
| E27 | SUS304 | None | <0.4 | 320 | 2.1 | -70 | A+ | A+ | A+ |
| E28 | A5052 | None | <0.4 | 320 | 1.5 | -72 | A+ | A+ | A+ |
| E29 | Isotropic graphite | None | <0.4 | 320 | 1.1 | -62 | A+ | A+ | A+ |
| E30 | SUS304 | Pure Mg | <0.4 | 320 | 1.3 | -71 | A+ | A+ | A+ |
| E31 | SUS304 | Al-35Mg | <0.4 | 320 | 0.8 | -72 | A+ | A+ | A+ |
| E32 | SUS304 | A5052 | <0.4 | 320 | 1.5 | -70 | A+ | A+ | A+ |
| C21 | None | None | 180 | 320 | 14.2 | -56 | B | A | A+ |
| C22 | None | None | <0.4 | 140 | 18.8 | -52 | B | A | A+ |
| C23 | None | None | 180 | 140 | 33.6 | -44 | C | B | A |
| C24 | None | None | <0.4 | Not heated | 33.4 | -45 | C | B | A |
| C25 | SUS304 | None | <0.4 | Not heated | 39.7 | -42 | B | A | A |
| C26 | Isotropic graphite | None | <0.4 | Not heated | 36.5 | -39 | B | A | A |
| C27 | None | None | Atmospheric pressure | Not heated | 64.6 | -40 | D | B | B |
| C28 | Isotropic graphite | None | Atmospheric pressure | Not heated | 89.4 | -40 | D | C | C |

It is noted that the meanings of the symbols mentioned in the columns of the evaluation results in Table 3 are as below.
A+: Extremely satisfactory
A: Satisfactory, but some fillet shapes had uneven portions
B: There were portions in which fillets were not formed
C: There were many portions in which fillets were not formed
D: Fillets were not formed whatsoever

As can be understood from Table 3, the joined states were satisfactory in every test body E21-E32, in which preheating was performed in a reduced-pressure atmosphere and brazing was performed by supplying inert gas and in an inert-gas atmosphere. In particular, in test bodies E27-E32, in which preheating and brazing were performed in the state in which the material to be processed 103 was housed inside the shielding box 8, the fillet formation states on the outer sides of the flange parts 711 were more satisfactory than in test bodies E21-E26, in which brazing was performed without using the shielding box 8. It is noted that in test bodies E21-E26, the fillet formation states on the outer sides of flange parts 711 were somewhat poorer than in test bodies E27-E32, but nevertheless the joined states did not present a problem from the standpoint of practical use.

In addition, in test bodies E30-E32, in which brazing was performed in the state in which the sacrificial-oxide materials 82 were housed in the shielding box 8, the fillets formed on the outer sides of the flange parts 711 were larger than in test bodies E27-E29, in which brazing was performed without using the sacrificial-oxide materials 82. Based on this, the oxygen concentration inside the shielding box 8 could be decreased by the action of the sacrificial-oxide materials 82 and, as a result, it was understood that the wettability of the filler material on the outer sides of the flange parts 711 improved.

In test body C21, in which the pressure in the preheating chamber 2 was set to 180 Pa, and in test body C22, in which the set temperature of the preheating chamber 2 was set to 140°C, fillet tearings occurred on the outer sides of the flange parts 711. In addition, even in fillets in the interior of each mini-core, that is, even in the fillets formed on the inner sides of the flange parts 711 and the fillets formed between the cup parts 71 and the inner fins 72, the formation states were poorer than in test body E21 and the like. It is noted that it is assumed that, when the temperature in the preheating chamber 2 is 140°C, the temperature of the material to be processed 103 reached approximately 135-140°C.

In test body C23, in which both the pressure and the temperature in the preheating chamber 2 were set to poor conditions, and in test body C24, in which preheating was not performed, the fillet formation states were worse both inward and outward of the mini-core than in test body C22.

Because test body C25 and test body C26 used the shielding box 8, the fillet formation states were improved over test body C24, in which only pressure reduction of the preheating chamber 2 was performed. Nevertheless, because fillet tearings occurred on the outer sides of the flange parts 711, which resulted in joint failures, they did not reach a level that presented no problem from the standpoint of practical use.

In addition, in test bodies C27 and C28, in which both preheating and pressure reduction were not performed, many fillet tearings occurred both inward and outward of the mini-core, which resulted in joint failures. In particular, in test body C28, brazing was performed, as is, in the state in which the interior of the shielding box 8 was at ambient atmosphere, and consequently the joined states worsened instead and virtually no fillets were formed.

## Claims

1. A brazing furnace used in brazing of a material to be processed composed of an aluminum material, comprising:
a preheating chamber; and
a brazing chamber;
wherein the preheating chamber comprises: a vacuum pump for reducing the pressure inside the chamber in the state in which the material to be processed is housed; a preheating apparatus, which preheats the material to be processed in a reduced-pressure atmosphere; and a pressure-restoring, gas-introducing apparatus, which introduces inert gas for restoring the pressure inside the chamber after the preheating; and
the brazing chamber comprises: a gas-replacing apparatus, which introduces inert gas into the chamber; and a main heating apparatus, which heats the material to be processed to a brazing temperature.

2. The brazing furnace according to claim 1, wherein the preheating chamber is configured such that the pressure inside the chamber can be set to 100 Pa or less.

3. The brazing furnace according to claim 1 or 2, wherein the preheating apparatus is configured such that the temperature of the material to be processed can be set to greater than 200°C.

4. The brazing furnace according to any one of claims 1-3, wherein:
the main heating apparatus comprises a plurality of subunits, the temperature of each subunit being separately adjustable; and
the plurality of subunits is disposed along a transport direction of the material to be processed.

5. The brazing furnace according to any one of claims 1-4, wherein:
the brazing furnace comprises a cooling chamber that communicates with the brazing chamber; and
the cooling chamber comprises a cooling-gas introducing apparatus that introduces inert gas into the chamber.

6. The brazing furnace according to any one of claims 1-5, wherein the brazing furnace comprises a transport apparatus that transports the material to be processed from an entrance to an exit.

7. An aluminum-material brazing method, comprising:
preheating a material to be processed, composed of an aluminum material, in a reduced-pressure atmosphere of 100 Pa or less;
next, making the surroundings of the material to be processed an inert-gas atmosphere by supplying an inert gas; and
subsequently, heating and brazing the material to be processed in the state in which the inert-gas atmosphere is maintained.

8. The aluminum-material brazing method according to claim 7, wherein the preheating is performed by heating the material to be processed to a temperature that is greater than 200°C and 400°C or less.

9. The aluminum-material brazing method according to claim 7 or 8, wherein on the material to be processed, a fluoride-based flux is applied in advance on a portion at which brazing is to be performed.

10. The aluminum-material brazing method according to claim 7 or 8, wherein on the material to be processed, a fluoride-based flux is not applied in advance on a portion at which brazing is to be performed.

11. The aluminum-material brazing method according to claim 10, wherein the preheating and the brazing are performed in the state in which the material to be processed is housed in a shielding box, which is composed of a metal or graphite and which has a vent.

12. The aluminum-material brazing method according to claim 11, wherein a sacrificial-oxide material that consumes oxygen in the shielding box is further housed inside the box.

13. The aluminum-material brazing method according to any one of claims 7-12, wherein brazing is performed using the brazing furnace according to any one of claims 1-6.
